# EUROPÄISCHE PATENTSCHRIFT

(11) **EP 0 589 246 B1**
(45) Veröffentlichungstag und Bekanntmachung des Hinweises auf die Patenterteilung: **26.05.1999**
(21) Anmeldenummer: 93113959.6
(22) Anmeldetag: 31.08.1993
(51) Int. Cl.: H04J 3/08, H04J 3/14

(54) **Verfahren zum Übertragen von Datensignalen in Form von aufeinanderfolgenden Bitgruppen**
Method for the transmission of data signals transmitted in segmential bit groups
Méthode de transmission de signaux de données transmis en groupes de bits les uns après les autres

(30) Priorität: 25.09.1992 DE 4232269
(43) Veröffentlichungstag der Anmeldung: 30.03.1994
(73) Patentinhaber: SIEMENS AKTIENGESELLSCHAFT, 80333 München (DE)
(72) Erfinder: Singer, Johannes Dipl.-Ing., D-82110 Germering (DE)

(56) Entgegenhaltungen:
- DE-A- 3 215 448
- FR-A- 2 522 908
- TELCOM REPORT Bd. 2 , 1979 , MUNCHEN (DE) Seiten 159 - 163 CHARLES CHAILLIE ET AL. 'Fehlererkennung und Fehlerlokalisierung in Datennetzen.'

## Beschreibung

Die Erfindung betrifft ein Verfahren zum Übertragen von Datensignalen in Form von aufeinanderfolgenden Bitgruppen gemäß Oberbegriff des Patentanspruches 1.

Es ist bereits ein Verfahren zum Übertragen von Datensignalen in Form von aufeinanderfolgenden Bitgruppen bekannt ("telcom report", 2 (1979), Beiheft "Digital-Übertragungstechnik", Seiten 155 bis 159). Bei diesem bekannten Verfahren werden in Teilnehmeranschlußgeräten aus mit einer festgelegten Übertragungsbitrate auftretenden Datensignalen als Envelopes bezeichnete Bitgruppen gebildet, welche jeweils aus einer festgelegten Anzahl von Datenbits, beispielsweise 8 Datenbits, sowie zwei Zusatzbits gebildet sind. Durch ein erstes dieser Zusatzbits, das auch als Statusbit bezeichnet wird, ist dabei bei Wählverbindungen angezeigt, ob es sich bei den in der jeweiligen Bitgruppe enthaltenen Datensignalen um den Verbindungsaufbau bzw. Verbindungsabbau dienende Signalisierungsinformationen oder um Datensignale handelt, die im Zuge einer bestehenden Verbindung zu übertragen sind. Das verbleibende zweite, auch als Alignmentbit bezeichnete Zusatzbit dient dagegen für die Übertragung von Synchronisierinformationen.

Durch die in den einzelnen Bitgruppen enthaltenen Zusatzbits erhöht sich die Übertragungsbitrate für die Übertragung der Bitgruppen gegenüber der Übertragungsbitrate, mit der die ursprünglichen Datensignale auftreten. Bei einer Übertragungsbitrate der Datensignale von 2,4 kbit/s und einer (8 + 2)-Bitgruppen-Bildung ergibt sich beispielsweise eine Übertragungsbitrate für die Bitgruppen von 3 kbit/s. Die in den zu übertragenden Bitgruppen enthaltenen Zusatzbits werden empfangsseitig gemäß ihrer Funktion bewertet und aus dem Datenfluß wieder ausgeblendet, so daß danach bei dem angenommenen Beispiel die Datensignale wieder mit einer Übertragungsbitrate von 2,4 kbit/s auftreten.

Außerdem ist bereits vorgeschlagen worden, daß die von einer Signalabgabe-/aufnahmeeinrichtung mit einer ersten Übertragungsbitrate bereitgestellten Bitgruppen dadurch auf eine höhere zweite Übertragungsbitrate umgesetzt werden können, daß durch eine der Signalabgabe-/aufnahmeeinrichtung nachgeschaltete Umsetzeinrichtung nach Maßgabe des Auftretens der Synchronisierbitfolge die Bitgruppen jeweils um eine dem Verhältnis der zweiten zur ersten Übertragungsbitrate entsprechende Anzahl von Zusatzbits erweitert und mit der zweiten Übertragungsbitrate übertragen werden.

Darüber hinaus ist im Zusammenhang mit einem aus zwei über eine Übertragungsstrecke miteinander verbundenen Zeitmultiplexeinrichtungen bestehenden Zeitmultiplexsystem ein Verfahren zur Rahmensynchronisierung bekannt (DE-AS 28 11 851). Bei diesem Verfahren werden pro Zeitmultiplexrahmen m Zeitschlitze bereitgestellt, wobei in einem solchen Zeitmultiplexrahmen m-1 Datenbits und ein Synchronisierbit enthalten sind. p 6 einanderfolgende Synchronisierbits bilden dabei ein Synchronisierwort. Vor Erreichen eines synchronen Zustandes wird ein Synchronisieralarm angezeigt und nach zwei aufeinanderfolgenden Synchronisierworten der Beginn einer Prüfzeit festgelegt, deren Dauer ein Vielfaches von p Zeitmultiplexrahmen beträgt. Falls während der Prüfzeit fortlaufend Synchronisierworte empfangen werden, wird der Synchronisieralarm abgeschaltet. Wird jedoch ein einziges Synchronisierwort nicht erkannt, bleibt der Synchronisieralarm bestehen. Ausgehend vom synchronen Zustand wird Synchronisieralarm gegeben, falls mehrere Synchronisierworte nicht erkannt werden.

Bei Auftreten des festgelegten Synchronisierwortes in zwei unterschiedlichen Zeitschlitzen wird nach Erkennen zweier aufeinanderfolgender Synchronisierworte der Beginn der zuvor genannten Prüfzeit festgelegt. Während der Prüfzeit wird laufend überprüft, ob in zwei verschiedenen Zeitschlitzen Synchronisierworte empfangen werden und falls dies der Fall ist, bleibt der Synchronisieralarm bestehen. Nach einer vorgegebenen Dauer des Synchronisieralarms werden anstelle der Datenbits sendeseitiger Datenquellen Binärsignale vorgegebener Binärwerte gesendet. Nach erfolgter Rahmensynchronisierung werden dann wieder die Datenbits der sendeseitigen Datenquellen gesendet. Dabei ist bei dem bekannten Verfahren nicht angegeben, wie der in der empfangsseitigen Multiplexeinrichtung angezeigte Synchronisieralarm zu der sendeseitigen Multiplexeinrichtung hin übertragen wird, um in dieser die Abgabe der festgelegten Binärsignale nach dem Auftreten von Synchronisierworten in zwei unterschiedlichen Zeitschlitzen zu steuern.

Es ist nun Aufgabe der vorliegenden Erfindung, einen Weg zu zeigen, wie ein Verfahren gemäß Oberbegriff des Patentanspruches 1 ausgebildet werden kann, um mit einem geringen Steuerungsaufwand die mit einer ersten Übertragungsbitrate auftretenden Bitgruppen in Bitgruppen umzusetzen, die mit einem gegenüber der ersten Übertragungsbitrate höheren zweiten Übertragungsbitrate übertragen werden können.

Gelöst wird diese Aufgabe durch die im Patentanspruch 1 angegebenen Verfahrensmerkmale.

Die Erfindung bringt dabei den Vorteil mit sich, daß es mit einem geringen Steuerungsaufwand möglich ist, die von einer Signalabgabe-/aufnahmeeinrichtung bereitgestellten Bitgruppen durch ein zeitgerechtes Einfügen von Zusatzbits beispielsweise mit einer standardisierten, gegenüber der ursprünglichen Übertragungsbitrate der Bitgruppen höheren Übertragungsbitrate zu übertragen. Ein weiterer Vorteil besteht darin, daß durch die ständige Überprüfung der einzelnen Bitspuren hinsichtlich des Auftretens der festgelegten Synchronisierbitfolge ein zeitlich fehlerhaftes Einfügen der Zusatzbits in die einzelnen Bitgruppen vermieden wird. Ein weiterer Vorteil besteht schließlich darin, daß die Bitratenumsetzung sowie die damit verbundene Überwachung der Bitgruppen-Synchronisierung mit Hilfe einer gesonderten Umsetzeinrichtung vorgenommen wird. Auf diese Weise ist es möglich, die Signalabgabe-/aufnahmeeinrichtung bei einer geforderten Bitratenumsetzung mit der genannten Umsetzeinrichtung, andererenfalls dagegen mit einer für ein vorgegebenes Übertragungsverfahren ausgelegten Übertragungseinrichtung zu verbinden.

Vorteilhafte Ausgestaltungen der Erfindung ergeben sich aus den Patentansprüchen 2 bis 6.

Im folgenden wird nun die vorliegende Erfindung anhand einer Zeichnung beispielsweise näher erläutert.

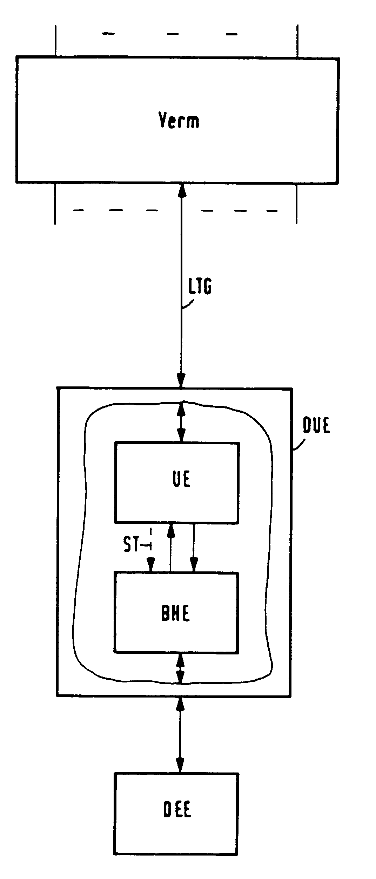

In der Zeichnung ist ausschnittweise der schematische Aufbau einer Datenübertragungseinrichtung DUE dargestellt, welche einerseits mit einer beispielsweise im Duplexbetrieb Datensignale aufnehmenden und abgebenden Datenendeinrichtung DEE und andererseits mit einer Übertragungsleitung LTG verbunden ist. An diese möge beispielsweise eine Vermittlungseinrichtung Verm bzw. eine weitere Datenübertragungseinrichtung angeschlossen sein.

Die Datenübertragungseinrichtung DUE weist eine Signalabgabe-/aufnahmeeinrichtung BHE auf, welche beispielsweise einerseits von der Datenendeinrichtung DEE her aufgenommene Datensignale in über die Übertragungsleitung LTG zu übertragende Bitgruppen einfügt und andererseits in über die Übertragungsleitung übertragenen Bitgruppen enthaltene Datensignale an die Datenendeinrichtung DEE weiterleitet. Die von der Signalabgabe-/aufnahmeeinrichtung BHE gebildeten bzw. aufgelösten Bitgruppen, die auch als Envelopes bezeichnet werden, mögen dabei, wie in der eingangs genannten Druckschrift "telcom report" ausgeführt, aus einer festgelegten Anzahl von Datenbits, beispielsweise 8 Datenbits, sowie aus zwei Zusatzbits, nämlich einem sogenannten Alignmentbit und einem sogenannten Statusbit, gebildet sein. Durch die Alignmentbits aufeinanderfolgender Envelopes ist dabei eine Synchronisierbitfolge festgelegt, die beispielsweise aus einer ständigen 0,1-Folge besteht. Es sind mit Hilfe dieser Alignmentbits jedoch auch beliebige andere Synchronisierbitfolgen festlegbar. Durch diese Zusatzbits ist bei dem angegebenen Beispiel die Übertragungsbitrate der Envelopes um 25 % gegenüber der Übertragungsbitrate der von der Datenendeinrichtung DEE abgegebenen bzw. aufgenommenen Datenbits erhöht.

Die Übertragungsbitrate der von der Signalabgabe-/aufnahmeeinrichtung BHE abgegebenen Envelopes weicht aufgrund der Zusatzbits von den beispielsweise für eine Übertragung mit einem modulierten Träger standardisierten Übertragungsbitraten ab. Eine derartige standardisierte Übertragungsbitrate ist beispielsweise 7,2 kbit/s. Dagegen resultiert aus einer Übertragungsbitrate der von der Datenendeinrichtung DEE abgegebenen Datensignale von 4,8 kbit/s durch die Bildung der Envelopes eine Übertragungsbitrate von 6 kbit/s. Für die Umsetzung der Übertragungsbitraten der Envelopes auf die höhere standardisierte Übertragungsbitrate von 7,2 kbit/s ist der Signalabgabe-aufnahmeeinrichtung BHE zu der Übertragungsleitung LTG hin eine Umsetzeinrichtung UE nachgeschaltet. Diese fügt bei dem angenommenenen Beispiel von (8 + 2) Bits pro Envelope jedem der Envelopes zwei Zusatzbits bei. Die erweiterten Envelopes werden anschließend mit der jeweiligen erhöhten, standardisierten Übertragungsbitrate bereitgestellt. Die zwei Zusatzbits können dabei an beliebigen, festgelegten Bitstellen innerhalb der einzelnen erweiterten Envelopes eingefügt sein. Dabei kann so vorgegangen sein, daß den Zusatzbits als Füllbits ein festgelegter logischer Pegel zugeordnet oder mit dem Zusatzbit beispielsweise das diesem unmittelbar vorangehende Datenbit nochmals übertragen wird.

Für das zeitgerechte Einfügen der gerade genannten Zusatzbits in die einzelnen Envelopes überprüft die Umsetzeinrichtung UE innerhalb des Datenstromes, der durch die von der Signalabgabe-/aufnahmeeinrichtung BHE abgegebenen Envelopes gebildet ist, das Auftreten der zuvor genannten Synchronisierbitfolge. Hierzu wertet die Umsetzeinrichtung UE sämtliche, bei dem Ausführungsbeispiel möglichen 10 Bitspuren (Zeitschlitze), die durch einander entsprechende Bitstellen aufeinanderfolgender Envelopes gebildet sind, gesondert aus. Wird dabei in lediglich einer der Bitspuren die Synchronisierbitfolge erkannt, so wird diese nachfolgend als Synchronisierspur gewertet und ausgehend von dieser die zuvor erwähnten Zusatzbits zeitgerecht in die Envelopes eingefügt.

Tritt dagegen die Synchronisierbitfolge in mehreren Bitspuren auf, so wird von der Umsetzeinrichtung UE her ein Fehlersignal zu der Signalabgabe-/aufnahmeeinrichtung BHE übertragen, mit welchem ein Synchronisierverlust angezeigt wird. Auf das Auftreten dieses Fehlersignals hin wird durch die Signalabgabe-/aufnahmeeinrichtung das Einfügen von durch die Datenendeinrichtung DEE abgegebenen Datensignalen in die Envelopes unterbrochen und anstelle dieser in den einzelnen Bitspuren ein von der genannten Synchronisierbitfolge abweichende Bitfolge übertragen. Dies kann beispielsweise dadurch erfolgen, daß in sämtlichen, für Datenbits vorgesehenen Bitstellen aufeinanderfolgender Envelopes ein festgelegter logischer Pegel "1" oder "0" übertragen wird. Auf das anschließende Auffinden der Synchroniserbitfolge in der tatsächlichen Synchronisierspur wird von der Umsetzeinrichtung UE das Fehlersignal wieder gelöscht. Auf dieses Löschen hin wird dann von der Signalabgabe-/aufnahmeeinrichtung das Einfügen von Datenbits in die Envelopes wieder aufgenommen.

Für die gerade erläuterte Steuerung der Signalabgabe/aufnahmeeinrichtung BHE kann in dieser eine durch das Auftreten des Fehlersignals umsteuerbare Datenweiche vorgesehen sein, welche eingangsseitig einerseits mit den von der Datenendeinrichtung DEE her abgegebenen Datensignalen und andererseits mit dem festgelegten logischen Pegel beaufschlagt ist.

Das genannte Fehlersignal kann von der Umsetzeinrichtung UE her über eine gesonderte Steuerleitung ST zu der Signalabgabe-/aufnahmeeinrichtung BHE übertragen werden. Alternativ dazu kann bei einer Duplexübertragung von Signalströmen über die Übertragungsleitung LTG auch so vorgegangen sein, daß nach einer festgelegten Anzahl von Synchronisierbits bzw. zwischen einer festgelegten Anzahl von Synchronisierbitfolgen ein für die Übertragung des Fehlersignals dienendes Informationsbit eingefügt ist, welches von der Signalabgabe-/aufnahmeeinrichtung BHE gesondert überwacht wird.

Für die zuvor erläuterte Überwachung der einzelnen Bitspuren kann in der Umsetzeinrichtung UE eine von den Envelopes zu durchlaufende Schieberegisteranordnung vorgesehen sein, welche über eine der Anzahl der zu einem Envelope gehörenden Bits, bei dem angenommenen Beispiel also 10 Bits, entsprechende Anzahl von Registerzellen verfügt. An parallele Ausgänge dieser Registerzellen ist jeweils eine gesonderte Vergleicheranordnung angeschlossen. Die Vergleicheranordnungen werden dabei lediglich im Abstand zweier aufeinanderfolgender Envelopes aktiviert, so daß jede dieser Vergleicheranordnungen einer der zuvor genannten Bitspuren zugeordnet ist. Die jeweilige Vergleicheranordnung überwacht demzufolge das Auftreten der vorgegebenen Synchronisierbitfolge in der jeweiligen Bitspur. Dabei können die einzelnen Vergleicheranordnungen derart ausgelegt sein, daß durch diese jeweils die Synchronisierbitfolge in beliebigen Phasenlagen erkannt wird. Eine dafür geeignete Vergleicheranordnung ist beispielsweise in der DE-OS 38 06 429 beschrieben. Darüber hinaus können die Vergleicheranordnungen jeweils über eine Zähleranordnung verfügen, durch welche lediglich mit dem Auftreten einer festgelegten Anzahl aufeinanderfolgender Synchronisierbitfolgen das Auffinden der Synchronisierbitfolge in der jeweiligen Bitspur angezeigt wird.

Vorstehend wurde lediglich der Fall betrachtet, daß durch die Umsetzeinrichtung UE das Auftreten der Synchronisierbitfolge überwacht wird, um die von der Signalabgabe-/aufnahmeeinrichtung BHE abgegebenen Envelopes zeitgerecht zu erweitern. Entsprechende Steuerungsvorgänge laufen in der Umsetzeinrichtung auch dann ab, wenn im Duplexbetrieb aus den über die Übertragungsleitung LTG übertragenen erweiterten Envelopes die zuvor genannten Zusatzbits durch die Umsetzeinrichtung zeitgerecht zu entfernen sind, um der Signalabgabe-/aufnahmeeinrichtung BHE entsprechend reduzierte Envelopes zuzuführen.

Abschließend sei noch darauf hingewiesen, daß zwar vorstehend davon ausgegangen wurde, daß an die Signalabgabe/aufnahmeeinrichtung BHE lediglich eine Datenendeinrichtung DEE angeschlossen ist. Anstelle einer einzigen Datenendeinrichtung kann jedoch auch eine Mehrzahl derartiger Datenendeinrichtungen vorgesehen sein. Die Signalabgabe/aufnahmeeinrichtung fügt dabei die von diesen abgegebenen Datensignale zeitverschachtelt in zu übertragende Envelopes ein bzw. löst die in Gegenrichtung eintreffenden Envelopes auf, um die in diesen enthaltenen Datensignale an die einzelnen Datenendeinrichtungen zu verteilen.

Darüber hinaus können die von der Signalabgabe-/aufnahmeeinrichtung BHE breitgestellten Bitgruppen nach der zuvor erläuterten Erweiterung auch in einer umgesetzen Form, beispielsweise durch Modulation eines Trägers, übertragen werden. In diesem Falle kann die zuvor genannte Umsetzeinrichtung UE Bestandteil einer der Signalabgabe/aufnahmeeinrichtung nachgeschalteten, die Umsetzung bewirkenden Übertragungseinrichtung sein.

## Patentansprüche

1. Verfahren zum Übertragen von durch eine Signalabgabe/aufnahmeeinrichtung (BHE) mit einer ersten Übertragungsbitrate bereitgestellten Datensignalen in Form von aufeinanderfolgenden Bitgruppen, welche jeweils aus einer festgelegten Anzahl von Datenbits und wenigstens einem Zusatzbit in Form eines zu einer äquidistant verteilten Synchronisierbitfolge gehörenden Sychronisierbits gebildet sind, mit einer gegenüber der ersten Übertragungsbitrate höheren zweiten Übertragungsbitrate,
**dadurch gekennzeichnet,**
daß bei durch eine der Signalabgabe-/aufnahmeeinrichtung (BHE) nachgeschaltete Umsetzeinrichtung (UE) nach Maßgabe des Auftretens der Synchronisierbitfolge bewirkter Erweiterung die Bitgruppen jeweils um eine dem Verhältnis der zweiten zur ersten Übertragungsbitrate entsprechende Anzahl von Zusatzbits und Übertragung dieser Bitgruppen mit der zweiten Übertragungsbitrate für das Auffinden der Synchronisierbitfolge sämtliche, jeweils durch einander entsprechende Bitstellen aufeinanderfolgender Bitgruppen festgelegte Bitspuren gesondert überwacht werden,
daß bei Auftreten der Synchronisierbitfolge in lediglich einer der Bitspuren die jeweilige Bitspur als Synchronisierbitspur gewertet wird,
daß bei Auftreten der Synchronisierbitfolge in mehreren Bitspuren dagegen der Signalabgabe-/aufnahmeeinrichtung (BHE) von der Umsetzeinrichtung (UE) her ein einen Synchronisierverlust anzeigendes Fehlersignal zugeführt wird, auf dessen Auftreten hin durch die Signalabgabe-/aufnahmeeinrichtung (BHE) das Einfügen von Datenbits in die einzelnen Bitgruppen unterbrochen und in die für Datenbits vorgesehenen Bitspuren jeweils ein von der Synchronisierbitfolge abweichendes Bitmuster eingetragen wird
und daß erst mit dem anschließenden Auffinden der Synchronisierbitfolge durch die Umsetzeinrichtung und der damit verbundenen Wegnahme des Fehlersignals das Einfügen von Datenbits in die Bitgruppen durch die Signalabgabe-/aufnahmeeinrichtung (BHE) wieder aufgenommen wird.

2. Verfahren nach Anspruch 1,
**dadurch gekennzeichnet,**
daß das Fehlersignal von der Umsetzeinrichtung (UE) her über eine gesonderte Steuerleitung an die Signalabgabe-/ aufnahmeeinrichtung (BHE) abgegeben wird.

3. Verfahren nach Anspruch 1,
**dadurch gekennzeichnet,**
daß bei einer Einbeziehung der Signalabgabe-/aufnahmeeinrichtung (BHE) in eine Duplexübertragung von Signalströmen das Fehlersignal von der Umsetzeinrichtung (UE) her durch eine festgelegte Codierung eines wenigstens aus einem Informationsbit bestehenden, zwischen aufeinanderfolgende Synchronisierbitfolgen eingefügten Informationssignals übertragen wird.

4. Verfahren nach einem der Ansprüche 1 bis 3,
**dadurch gekennzeichnet,**
daß für das Erzeugen eines von der Synchronisierbitfolge abweichenden Bitmusters in die für die Übertragung von Datensignalen vorgesehenen Bitstellen aufeinanderfolgender Bitgruppen ein einheitlich festgelegter logischer Pegel eingetragen wird.

5. Verfahren nach einem der Ansprüche 1 bis 4,
**dadurch gekennzeichnet,**
daß die Signalabgabe-/aufnahmeeinrichtung (BHE) und die Umsetzeinrichtung (UE) Bestandteile einer Datenübertragungseinrichtung (DUE) sind.

## Claims

1. Method for the transmission of data signals, provided by a signal emitting/receiving device (BHE) with a first transmission bit rate, in the form of successive bit groups which are each formed from a defined number of data bits and at least one additional bit in the form of a synchronization bit belonging to an equidistantly distributed synchronization bit sequence, with a second transmission bit rate which is higher than the first transmission bit rate,
characterized
in that in the event of extension of the bit groups, the said extension being effected by a conversion device (UE) , connected downstream of the signal emitting/receiving device (BHE), in accordance with the occurrence of the synchronization bit sequence, in each case by a number of additional bits, the said number corresponding to the ratio of the second to the first transmission bit rate, and transmission of these bit groups with the second transmission bit rate, for finding the synchronization bit sequence, all the bit tracks defined in each case by mutually corresponding bit positions of successive bit groups are monitored separately,
in that in the event of the synchronization bit sequence occurring in just one of the bit tracks, the respective bit track is- evaluated as a synchronization bit track,
in that in the event of the synchronization bit sequence occurring in a plurality of bit tracks, on the other hand, an error signal indicating a loss of synchronization is fed to the signal emitting/receiving device (BHE) from the conversion device (UE) , in response to the occurrence of which error signal the signal emitting/receiving device (BHE) interrupts the insertion of data bits into the individual bit groups and enters a bit pattern which deviates from the synchronization bit sequence into each of the bit tracks provided for data bits,
and in that only once the synchronization bit sequence has subsequently been found by the conversion device and the error signal has, consequently, been removed is the insertion of data bits into the bit groups resumed by the signal emitting/receiving device (BHE).

2. Method according to Claim 1,
characterized
in that the error signal is emitted from the conversion device (UE) via a separate control line to the signal emitting/receiving device (BHE).

3. Method according to Claim 1,
characterized
in that in the event of the signal emitting/receiving device (BHE) being included in duplex transmission of signal streams, the error signal is transmitted from the conversion device (UE) through a defined coding of an information signal which at least comprises one information bit and is inserted between successive synchronization sequences.

4. Method according to one of Claims 1 to 3, characterized in that for the generation of a bit pattern which deviates from the synchronization bit sequence, a uniformly defined logic level is entered into those bit positions of successive bit groups which are provided for the transmission of data signals.

5. Method according to one of Claims 1 to 4, characterized in that the signal emitting/receiving device (BHE) and the conversion device (UE) are component parts of a data transmission device (DUE)

## Revendications

1. Procédé de transmission de signaux de données, fournis par un dispositif d'émission et de réception de signaux (BHE) avec un premier débit binaire de transmission, sous forme de groupes de bits successifs, qui sont formés respectivement d'un nombre fixé de bits de données et d'au moins un bit supplémentaire sous la forme d'un bit de synchronisation appartenant à une séquence de bits de synchronisation répartie à équidistance, avec un deuxième débit binaire de transmission supérieur au premier débit binaire de transmission,
caractérisé par le fait que
lors de l'extension, effectuée par un dispositif de conversion (UE) branché du côté aval du dispositif d'émission et de réception de signaux (BHE) en fonction de l'arrivée de la séquence de bits de synchronisation, des groupes de bits à chaque fois d'un nombre de bits supplémentaires correspondant au rapport du deuxième au premier débit binaire de transmission et lors de la transmission de ces groupes de bits avec le deuxième débit binaire de transmission, toutes les pistes de bits fixées à chaque fois par des positions binaires se correspondant dans des groupes de bits successifs sont surveillées séparément afin de détecter la séquence de bits de synchronisation,
lors de la détection de la séquence de bits de synchronisation dans une seule des pistes de bits, la piste de bits respective est évaluée comme piste de bits de synchronisation,
par contre, lors de la détection de la séquence de bits de synchronisation dans plusieurs pistes de bits, il est envoyé au dispositif d'émission et de réception de signaux (BHE) par le dispositif de conversion (UE) un signal d'erreur qui indique une perte de synchronisation et à l'arrivée duquel le dispositif d'émission et de réception de signaux (BHE) interrompt l'insertion de bits de données dans les groupes de bits individuels et insère dans les pistes de bits prévues pour des bits de données à chaque fois un motif binaire s'écartant de la séquence de bits de synchronisation,
et seulement après la détection consécutive de la séquence de bits de synchronisation par le dispositif de conversion et après le retrait, lié à cette détection, du signal d'erreur, l'insertion de bits de données dans les groupes de bits par le dispositif d'émission et de réception de signaux (BHE) est reprise.

2. Procédé selon la revendication 1,
caractérisé par le fait que
le signal d'erreur est fourni par le dispositif de conversion (UE) au dispositif d'émission et de réception de signaux (BHE) par l'intermédiaire d'une ligne de commande particulière.

3. Procédé selon la revendication 1,
caractérisé par le fait que,
en cas d'intégration du dispositif d'émission et de réception de signaux (BHE) dans une transmission duplex de flux de signaux, le signal d'erreur est transmis par le dispositif de conversion (UE) au moyen d'un codage fixé d'un signal d'information constitué au moins d'un bit d'information et inséré entre deux séquences de bits de synchronisation successives.

4. Procédé selon l'une des revendications 1 à 3,
caractérisé par le fait que,
pour produire un motif binaire s'écartant de la séquence de bits de synchronisation, un niveau logique uniformément fixé est écrit dans les positions binaires, prévues pour la transmission de signaux de données, de groupes de bits successifs.

5. Procédé selon l'une des revendications 1 à 4,
caractérisé par le fait que
le dispositif d'émission et de réception de signaux (BHE) et le dispositif de conversion (UE) font partie d'un dispositif de transmission de données (DUE).
